# EUROPEAN PATENT APPLICATION

(11) **EP 1 871 024 A1**
(43) Date of publication of application: **26.12.2007**
(21) Application number: 05728473.9
(22) Date of filing: 06.04.2005
(51) Int. Cl.: H04H 1/00, H04B 1/16, H04N 5/44, H04N 7/173

(54) **METHOD FOR ARRANGING ZAPPING STREAMS IN MPE-FEC FRAME AND RECEIVER**

(71) Applicant: Matsusita Electric Industrial Co., Ltd., Kadoma-shi, Osaka 571-8501 (JP)
(72) Inventor: KISODA, Akira, c/o Matsushita El. Ind. Co., Ltd., Chuo-ku, Osaka-shi, Osaka 540-6207 (JP); USUKI, Izumi, c/o Matsushita El. Ind. Co., Ltd., Chuo-ku, Osaka-shi, Osaka 540-6207 (JP); SCHEID, Albrecht, c/o Panasonic R&D Center Germany GmbH, 63225 Langen (DE); KURSAWE, Thomas, c/o Panasonic R&D Center Germany GmbH, 63225 Langen (DE)
(74) Representative: Eisenführ, Speiser & Partner
(86) International application number: PCT/JP2005/006776
(87) International publication number: WO 2006/114830

(57) **Abstract**

In the invention, zapping streams respectively relating to a plurality of normal service are set in one burst, and the burst is transmitted as a zapping burst. The zapping burst is transmitted in a cycle of one second or less. A PID dedicated to a zapping burst is added to the zapping burst. Association between the zapping burst and the normal service is designated by an IP source address, an IP destination address, or a port number. The transmission performed in this manner make it possible to perform a zapping process without considerably changing an IP encapsulator on a transmission side and an existing receiver.

## Description

### TECHNICAL FIELD

The present invention relates to a zapping data transmitting method which increases channel switching speed in reception of terrestrial digital broadcasting DVB-H directed to mobile terminal in Europe and a receiving terminal which receives the zapping data.

### BACKGROUND ART

A transmitting scheme of terrestrial digital broadcasting in Europe is standardized as a DVB-T scheme by ETSI as disclosed in Digital Video Broadcasting (DVB); Framing structure, channel coding and modulation for digital terrestrial television; ETSI EN 300 744. However, partial receiving in units of segments like in Japanese domestic standard as disclosed in ARIB STD-B31, is not supported, and therefore, all signals must be received like a case of a fixed terminal such as an STB when a mobile terminal receives broadcasting in the DVB-T scheme. Because a mobile terminal has only a limited batter capacity, there are problems in practical use such that a large amount of power is consumed and a time period of continuous reproduction is short.

Therefore, in order to enable a long-time reproduction in a mobile terminal, a digital broadcasting scheme DVB-H is standardized as described in Digital Video Broadcasting (DVB); Transmission System for Handheld Terminals (DVB-H); ETSI EN 302 304 V1.1.1 (2004-11). In detail, the physical layer is standardized as described in Digital Video Broadcasting (DVB); Framing structure, channel coding and modulation for digital terrestrial television; ETSI EN 300 744, extending the DVB-T standard, and a link layer is standardized as described in DVB-Data broadcasting specification, ETSI EN 301 192 V1.4.1 (2004-11).

The DVB-H collects up packets of the same service into a packet set, and the packet set is transmitted as a data burst at a high speed in a short time. Packet sets of different services are sequentially transmitted one by one, so that a packet set of a different service is not mixed while transmitting one packet service. Low power consumption is realized on a receiver, by supplying power to a receiving unit only during a packet set of a desired service is being transmitted (hereinafter referred to as time slice).

### DISCLOSURE OF THE INVENTION

However, in the time slice, when selecting a different service of the same or another channel, i.e., when zapping, the next burst code of the selected service must be decoded before being displayed.

An interval of transmission of the burst is generally about 5 seconds to 10 seconds. A time period before video and audio of a new service appear is 2.5 seconds to 5 seconds on average, and 5 seconds to 10 seconds at maximum.

As described above, compared to a case in which an audience watches television at home, zapping takes an extended period of time when using time slice.

Therefore, a problem has been noted that, when selecting a channel, a waiting time before a selected service starts to be reproduced, and it is not possible to watch television by zapping smoothly.

The present invention is to solve the above noted problem and an object of the present invention to introduce zapping streams for zapping to shorten the time required for zapping.

The zapping stream transmits information relating to a DVB-H service in the same transport stream at a very low data rate. Examples of such information include an audio-visual content, a still image, and text information relating to the service, and any combination of these.

The present invention relates to a simple zapping support in IPDC of DVB-H. In particular, the present invention can be applied when a user performs zapping of television channels and cannot immediately access the selected AV service.

If a dedicated zapping service is frequently transmitted, it is possible to extract a still image, a video image, or audio data from the zapping service and to provide an audience with the still image, the video image, or the audio data.

The present invention relates to methods of arrangement, transmission, reception, processing, and decoding of such a zapping service.

According to these methods, it is not necessary for an IP encapsulator and a terminal to perform a special processing, and a zapping service may be added only by extension of a firmware to a common and popular hardware configuration. In the present invention, a configuration of a terminal that supports a zapping service of this type is also mentioned.

In order to solve the conventional problem, the present invention proposes transmission of a zapping service relating to a normal service. In the present invention, a burst transmitting method in which burst transmission of compressing and transmitting contents of each of services in a short time period at a transmission rate sufficiently higher than a reproduction rate of the contents of each service is performed, the method includes:,
concentrating data relating to the each service as zapping data;
arranging the zapping data in a burst for zapping; and
transmitting the burst as zapping burst.

The present invention also characterized in that a transmission frame of a zapping burst constitutes a zapping MPE-FEC frame as in a normal service, the zapping MPE-FEC frame is constituted by a zapping application data table and a zapping RS data table, and
the zapping application data table is buried with a zapping IP datagram, and the zapping IP datagram carries a zapping stream.

Further, a stream for zapping corresponding to a plurality of normal services may be arranged in one frame for zapping, and the zapping stream may be set in a unique PID different from that of a TS of the normal service and transmitted.

Further, an association between the stream for zapping in the frame for zapping and a normal service related thereto may be designated by an IP source address, an IP destination address, or a port number.

Further, a receiver which receives a stream of a normal service and a zapping stream, may include:
a first section filter/buffer unit, a first CRC-32 or a checksum calculating unit, a first MPE-decapsulator unit, a first MPE-FEC frame unit, and a first reliability frame unit which are used for processing a normal stream;
a second section filter/buffer unit, a second CRC-32 or checksum calculating unit, a second MPE-decapsulator unit, a second MPE-FEC frame unit, and a second reliability frame unit which are used for processing a stream for zapping operated in parallel to the normal stream.

As described above, according to the present invention, a zapping service is transmitted as a burst dedicated to the zapping service to make it easily separate the zapping service from a normal service. The method using bursts dedicated to the normal service and the zapping service can be easily supported by a front end of a DVB-H receiver, and can be easily implemented by using an available IP encapsulator at the present.

### BRIEF DESCRIPTION OF THE DRAWINGS

The present invention will become readily understood from the following description of preferred embodiments thereof made with reference to the accompanying drawings, in which like parts are designated by like reference numeral and in which:
FIG. 1 is a diagram showing an arrangement of five normal services and a zapping service corresponding to the normal service;
FIG. 2 is a diagram showing configurations of an application data table and a zapping application data table;
FIG. 3 shows a DVB-H front end model;
FIG. 4 is a flow chart of a parallel process in a receiving terminal;
FIG. 5 is a diagram showing a correspondence between a burst, a PID, and an IP address obtained by an IP encapsulator;
FIG. 6 is a flow chart of a single-system process at the receiving terminal; and
FIG. 7 is a diagram showing correspondence between a zapping service and a normal service.

### DESCRIPTION OF THE PREFERRED EMBODIMENTS

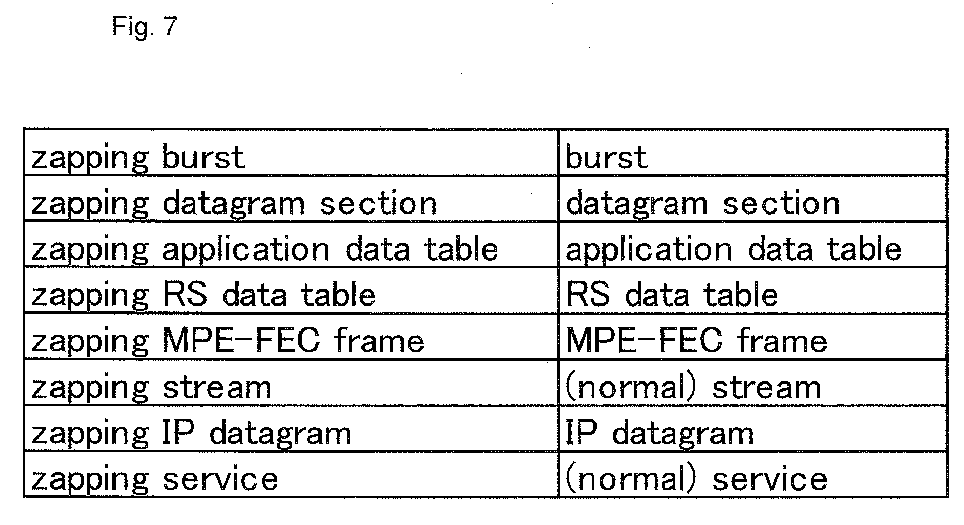

In the present invention, it is considered that a normal burst and a zapping burst are independent of each other. The zapping service conforms to the same rule as that of the normal service and defines terms for performing a process equivalent to the process of the normal service, as shown in FIG. 7.

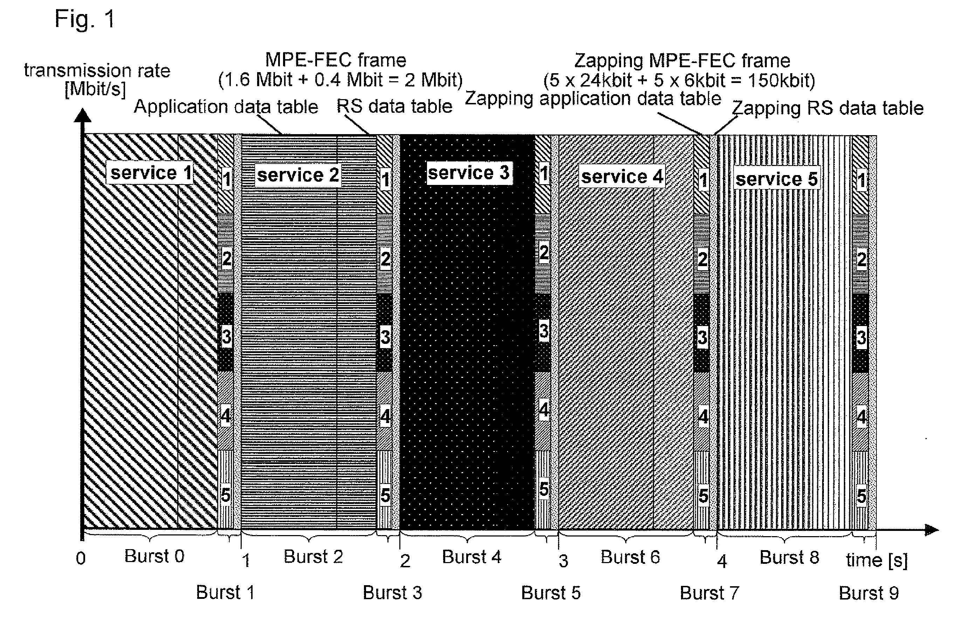

FIG. 1 shows an example of transmission of five burst services. In this case, the five services are transmitted as independent bursts, respectively. Zapping streams relating to the services are collected to constitute a burst dedicated to the zapping streams.

Usually, a zapping service must be transmitted so that the zapping service can be accessed for short time. A transmitting cycle of a normal service is different from a transmitting cycle of a zapping service. Each of the normal service and the zapping services can also be transmitted at a flexible rate or a constant rate.

Time of the predetermined cycle is selectable, and is defined by time for accessing the zapping service. Cycle time of the zapping service is 1 second in this example.

The present invention will be described in more detail.

### (First Embodiment)

A normal service and a zapping service related thereto are considered to be independent of each other. It is assumed that the zapping service conforms to the same rule of the normal service. In this case, terms relating to the zapping service are introduced. These terms are relating to a zapping stream/zapping service. The meanings of the terms are the same as the meanings defined for a normal service as described in DVB-Data broadcasting specification, ETSI EN 301 192 V1.4.1 (2004-11).

The normal service is transmitted such that the normal service is encapsulated in an MPE-FEC frame defined by DVB-Data broadcasting specification, ETSI EN 301 192 V1.4.1 (2004-11).

Zapping streams prepared for services are collected and encapsulated in a dedicated zapping MPE-FEC frame.

The MPE-FEC frame configuration and zapping application data table will be described below.

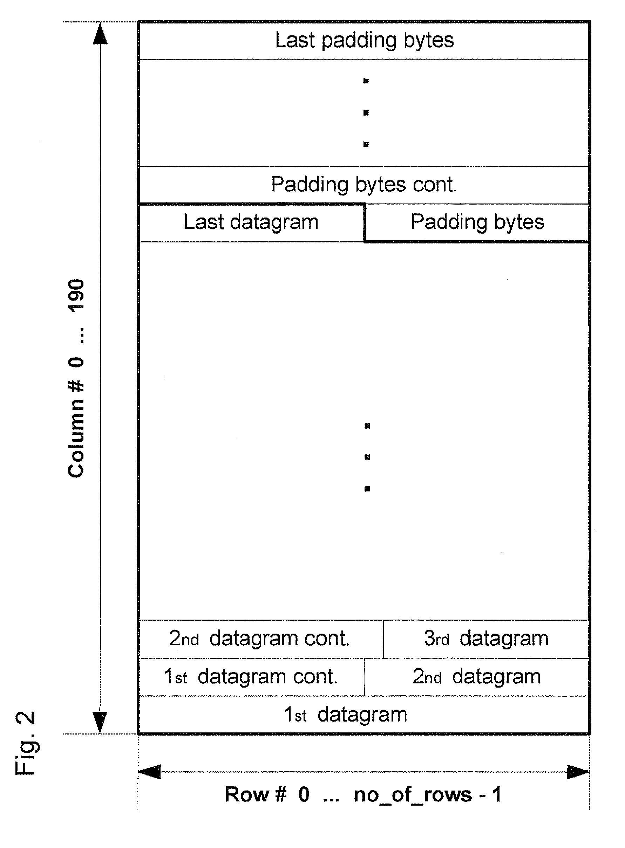

FIG. 2 shows an application data table (as described in DVB-Data broadcasting specification, ETSI EN 301 192 V1.4.1 (2004-11)) serving as a part of the MPE-FEC frame. The table is divided into rows and columns. Each position has 1 byte of an IP datagram. The IP datagrams are arranged in the order named: the first IP datagram, the second IP datagram, ... and so on.

Only streams of IP datagrams of one or several services are arranged in the table, and zapping streams are not arranged. All the services have different IP source addresses, different IP destination addresses, or different port numbers, respectively. If the application data table is not completely filled, blanks are filled with padding bytes. In this manner, the application data table is constituted.

Similarly, a new zapping application data table is introduced. The zapping application data table is exclusively used for carrying only zapping streams, and does not carry a stream of a normal service.

These zapping streams are generated by different zapping service generator supplied from different contents providers. These zapping streams are carried by zapping IP datagrams of a protocol stack like a normal IP datagram.

The zapping IP datagrams are arranged in the zapping application data table. The zapping application data table has the same configuration as that of the application data table described in DVB-Data broadcasting specification, ETSI EN 301 192 V1.4.1 (2004-11). However, the zapping IP data grams are constituted by zapping streams.

Zapping streams for different services are collected and arranged in the same zapping application data table. The zapping streams can be identified by the IP source addresses, the IP destination addresses, or the UDP port numbers of the zapping streams.

Similarly, the different normal streams arranged in the same application data table can be identified by the IP source addresses, the IP destination addresses, or the UDP port numbers of the normal streams.

A zapping RS data table will be defined below.

A table similar to an RS (Reed Solomon) data table "is introduced as a new zapping RS data table". The zapping RS data table is introduced to improve the receiving durability of the zapping application data table.

The zapping RS data table includes a zapping RS byte. The zapping RS byte is calculated from a related zapping application data table as in calculation of an RS byte in the RS data table from an application data table.

The defined zapping application data table and the defined zapping RS data table constitute a zapping MPE-FEC frame. The MPE-FEC frame is equivalent to the MPE-FEC frame as described in DVB-Data broadcasting specification, ETSI EN 301 192 V1.4.1 (2004-11).

A zapping burst is formed by collecting zapping streams of the respective normal services. In this manner, a zapping MPE-FEC frame which is short but considerably dense is constituted. When the zapping MPE-FEC frame is transmitted together with a zapping stream of another service, a time interleave effect in the MPE-FEC frame can also be achieved. However, the data rate of the zapping service is considerably lower than the data rate of a related normal service. For this reason, the number of rows of the zapping MPE-FEC frame can be set to be smaller than the number of rows of a normal MPE-FEC frame.

A method of receiving a zapping stream formed by the definition described above will be described below.

The normal MPE-FEC frame and the zapping MPE-FEC frame are identified by PIDs and can be filtered.

A specific zapping service can be selected by the IP source address, the IP destination address, or the port number from a zapping stream extracted by a PID filter.

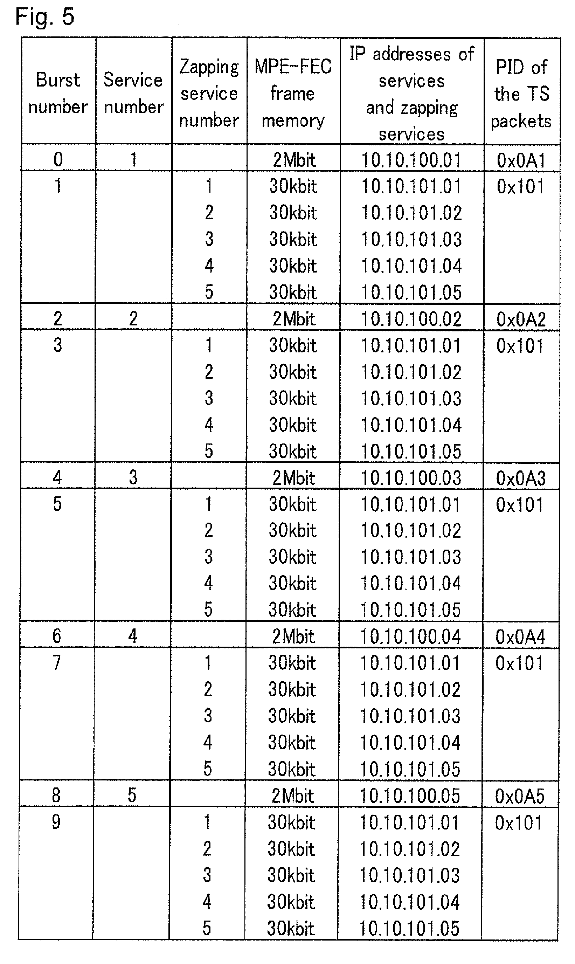

A method of concretely identifying the corresponding normal service from a zapping service will be described below. An example of the method is shown in FIG. 5.

In the embodiment, normal services are transmitted at burst numbers 0, 2, 4, 6, and 8, and zapping streams are transmitted at burst numbers, 1, 3, 5, 7, and 9. A burst which transmits zapping streams includes bursts of all the normal services.

In the embodiment, when zapping is started, a PID extracts a TS packet of 0x101. For example, it is assumed that burst 1 is extracted, and it is assumed that zapping service 5 is selected. In this case, a zapping stream of burst number 1 is displayed for 1 second, and zapping service 5 of burst number 3, zapping service 5 of burst number 5, and zapping service 5 of zapping service 7 are reproduced for 1 second each. Thereafter, service 5 transmitted at burst number 8 is reproduced.

The PID of the zapping burst is regulated in advance, or may be transmitted by using an EPG or the like.

Association between zapping service and normal services is performed by IP addresses. For example, as shown in FIG. 5, an IP address of a zapping stream is 10.10.101.05. An IP address 10.10.100.05 the fourth octet is equal to that of the zapping stream is found, and burst number 8 is received. Thereafter, a normal receiving process is started.

Association between a PID of a TS transmitted as a burst of a normal service and an IP address transmitted in the burst is regulated in advance. Alternatively, when transmission is performed by using an EPG or the like in advance, association between zapping services and normal services can be easily performed in the receiver.

For example, when information for associating the IP address of a service burst with a burst number is multiplexed as private data in the zapping service and transmitted to make it possible to smoothly perform burst receiving when a service burst is received.

Even though service ID information constituted by only a service burst relating to a zapping service which is being reproduced at the present is transmitted in a multiplexing manner, a service burst to be received can be specified with reference to SI information such as INT or the like.

### (Second Embodiment)

In this embodiment, a method of generating a zapping stream having the definition described in a first embodiment is described.

A zapping stream generator is provided to, e.g., a contents provider. The contents provider itself generates data for zapping from a normal service.

The zapping generator generates a zapping stream at predetermined intervals, i.e., once one second. Such zapping streams may be current snapshots having the same service contents of the same contents provider or copies such as audio/video data having a low data rate.

The zapping stream is transmitted by an appropriate IP protocol to an IP encapsulator through a network or the like. The IP encapsulator arranges all zapping streams from all contents providers in the same zapping application table within a predetermined period.

The IP encapsulator arranges zapping streams in a dedicated zapping MPE-FEC frame.

The arrangement of the zapping streams by the above method can be easily executed by an available IP encapsulator.

In the zapping stream generator, time out is set in all periods (in case of time out, a zapping stream is transmitted by the next zapping burst. The IP encapsulator generates a related zapping RS data table. Thereafter, as in the datagram section of (DVB-Data broadcasting specification, ETSI EN 301 192 V1.4.1 (2004-11)), the zapping service is set in a zapping data gram section. The zapping datagram section is distributed to a large number of TS packets and transmitted to a multiplex device by bursts.

When zapping services are transmitted at different time intervals, for example, when the zapping services are transmitted in different cycle times of 0.7 seconds or the like in place of 1 second, as described above, the zapping services are independently processed. At this time, time out time is also changed. A normal stream is processed by the same method as described above. Upgrading of an IP encapsulator for zapping support is very easy.

Time at which a burst next to the service burst described in DVB-Data broadcasting specification, ETSI EN 301 192 V1.4.1 (2004-11) is transmitted is transmitted for Δt set in the datagram section. Similarly, the zapping burst is transmitted by using a Δt field set in the zapping datagram section. However, if a DVB-H front end evaluates the value Δt to turn off the switch for a period of two continuous zapping bursts, a related normal service burst is lost.

As described above, the Δt field in a zapping datagram section header is set to be "power off prohibition". Alternatively, the Δt file must be set at the minimum value of 10 ms.

There is no indication which notifies transmitting time of a burst of a normal stream relating to a specific zapping stream. Although such an indication can be introduced, the complexness of an IP encapsulator on the transmitting side or a receiving terminal increases.

### (Third Embodiment)

This embodiment relates a DVB-H receiving terminal

As has been described above, a method of concentrically arranging zapping streams in a dedicated zapping MPE-FEC frame is very advantageous because zapping can be easily realized by the hardware of a receiver.

For this reason, a DVB-H receiving terminal which supports zapping may have a simple configuration.

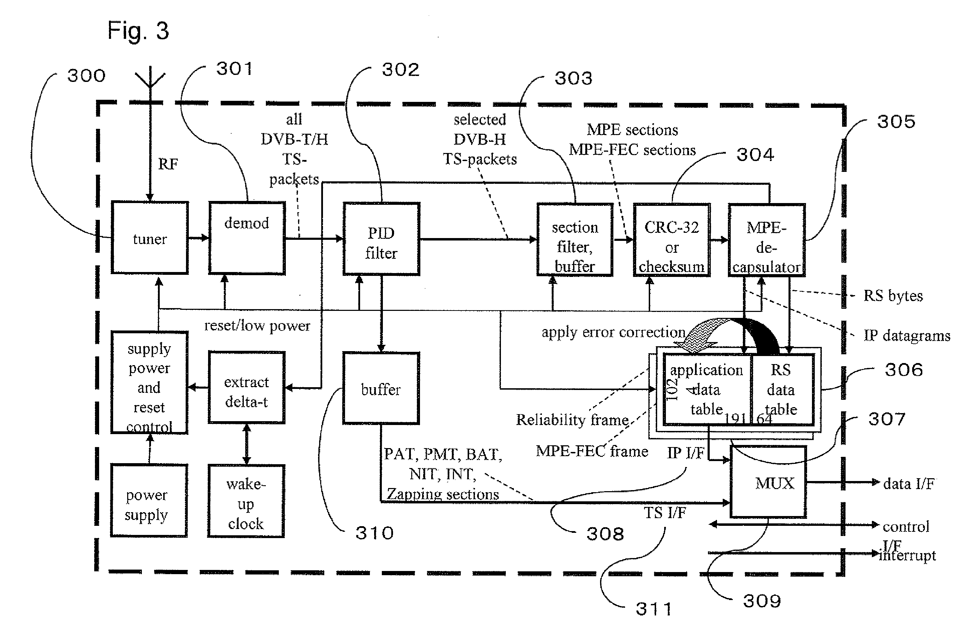

DVB-H front end units relating to the processes of the normal service shown in FIG. 3 include a tuner unit 300, a demodulating unit 301, a PID filter unit 302, a section filter/buffer unit 303, a CRC-32/checksum calculating unit 304, an MPE decapsulator unit 305, an MPE-FEC frame unit 306, a reliability frame unit 307, an IP interface unit 308, and a multiplexing unit 309. The details of the processes of the DVB-H front end are apparent to persons skilled in the art, and a description thereof will be omitted.

DVB-H front end units relating to a PSI/SI table process include the tuner unit 300, the demodulating unit 301, the PID filter unit 302, a buffer unit 310, TS interface unit 311, and the multiplexing unit 309. The operation of a process by DVB-H front end units is obvious to those skilled in the art, and therefore not detailed here.

DVB-H front end units relating to a zapping stream process are the same as those of the PSI/SI table process. The DVB-H front end units include the tuner unit 300, the demodulating unit 301, the PID filter unit 302, the buffer unit 310, the TS interface unit 311, and the multiplexing unit 309. In the embodiment of the present invention, as will be described later, the processes of the section filter/buffer unit, the CRC-32/checksum calculating unit, the MPE decapsulator unit, the MPE-FEC frame unit, and the reliability frame unit for a zapping service are executed by the firmware of a terminal outside the DVB-H front end. However, the section filter/buffer unit, the CRC-32/checksum calculating unit, the MPE decapsulator unit, the MPE-FEC frame unit, and the reliability frame unit for a zapping service may be held in the front end, and the processes may be performed.

An amount of zapping data is normally very small because one JPEG image has about 30 kilobits and an overhead of a protocol has about several hundred bits. For this reason, even a terminal having low performance can extract and display a JPEG image from a transport stream in one second.

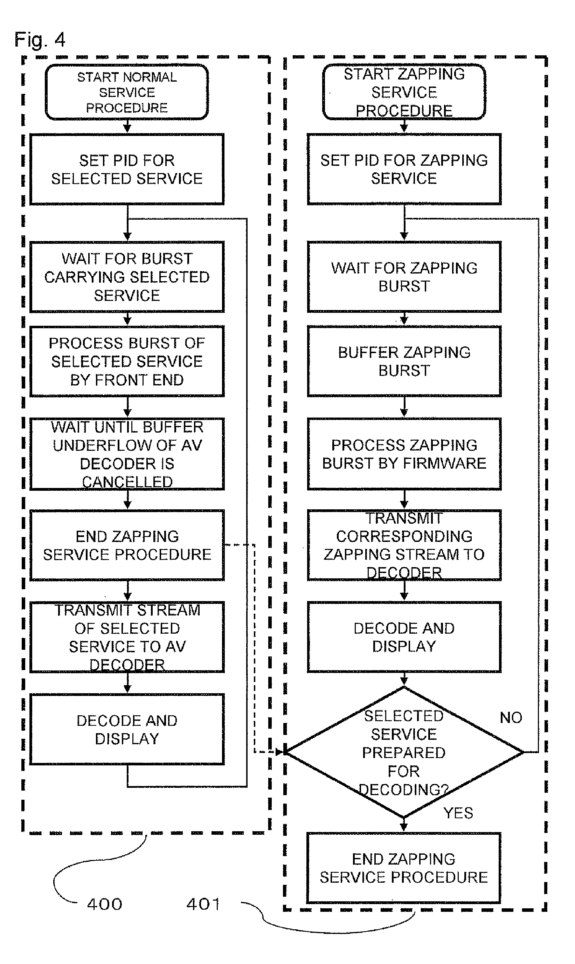

A flow chart of processes in the receiving terminal is shown in FIG. 4.

As described in the first embodiment, it is assumed that association between a PID of a TS transmitted as a burst of a normal service and an IP address transmitted in the burst is regulated in advance.

When selection of a service, i.e., selection of an IP address is performed by firmware of a terminal, a PID including the service is selected, and a normal burst is received. At the same time, a zapping burst having a unique PID is received.

A left-side process 400 for a normal service is performed by the front end shown in FIG. 3. A right-side process 401 for a zapping service is executed to data output from the multiplexing unit 309 in FIG. 3 by firmware of a terminal (not shown). When a user selects another service (another television channel), two processes independent of each other are started in parallel to each other. The left-side process 400 relating to the normal service can stop the right-side process 401 relating to the zapping service.

The left-side process 400 indicates a process of a normal AV service started after a user selects a new service. The process is mainly executed by hardware in the DVB-H front end. From a setting of a PID filter (according to FIG. 5, for example, 0x0A1 is set to transmit service 1 at burst 0), a process which waits for a burst and extracting an IP datagram from the burst has been known. For the reason, a description of the process will be omitted.

After the process of extracting an IP datagram, by interruption or another means, or by polling a register relating to an MPE-FEC frame, it is detected that the firmware can use a completely corrected application data table.

At an appropriate point of time before the next burst is received, the process stops the process 401 of the zapping service and reads an IP datagram from the application data table of the received burst. Thereafter, an AV payload is extracted and decoded, and contents are brought to a user through a screen and a loudspeaker.

When a power supply is turned on at the first time, as waiting time until the contents are brought to a user, at least, time until the first burst is received, time for processing the first burst, and time until a buffer of an AV decoder is recovered from underflow are required.

Therefore, since the right-side zapping process 401 in FIG. 4 rapidly finds the progress of a current service or event, the right-side process 401 is started in parallel to the left-side process 400. Since the transmitting interval of zapping bursts is sufficiently shorter than that of a normal service, the service can be rapidly found.

The process of zapping processed in parallel is as follows. First, a PID file is set in a PID for a zapping burst (For example, in FIG. 5, when 0x101 is set, zapping services of burst numbers 1, 3, 5, 7, 9, and the like transmitted at 1-second interval are accessed.).

A burst including a zapping service is received (according to FIG. 1, for example, within 1 second), and all TS packets are stored in the buffer.

The process is almost the same as receiving of a PSI/SI table which is necessary in a DVB-H (DVB-Data broadcasting specification, ETSI EN 301 192 V1.4.1 (2004-11)).

When, by polling a buffer or being interrupted or by another means, it is detected that several or all TS packets relating to zapping are stored in the buffer, the firmware reads these TS packets. Thereafter, the firmware collects zapping datagram sections to calculate CRC-32 or a checksum. Error correction using an RS data table is performed, and an MPE decapsulator process is performed.

A corresponding zapping stream is selected from all the zapping streams, the zapping payload (for example, a JPEG image file) of the zapping stream is extracted and decoded, and contents are brought to a user through a screen and a loudspeaker.

The process is repeated until the process is stopped by the normal process 400 (for example, until preparation for decoding the selected service and replacing the service with a zapping service is performed). Before the selected service is not prepared, the process continuously waits for the next zapping burst.

One zapping stream relating to the selected service is processed by a user in zapping and brought to the user. Another zapping stream included in the same zapping burst is cast off. However, when the other zapping stream has been stored in a memory, when the user selects another service within 1 second, the zapping stream can be immediately brought. For this reason, these zapping streams may be stored in the memory of the terminal without being cast off.

When the user selects another service, a zapping service corresponding to the selected service is brought until a normal service is prepared in the terminal. In place of this, not only the corresponding zapping service but also all other zapping services included in the same zapping burst or only a more preferable zapping service can be brought to the user.

Support of zapping is not limited by the DVB-H front end model described above. In place of buffering of a TS packet including a zapping stream, zapping-dedicated hardware (the section filter/buffer unit for a zapping data program section, the CRC-32/checksum calculating unit, the MPE decapsulator unit, the zapping MPE-FEC frame unit, the reliability frame unit, and the IP interface unit for zapping) may process these TS packets.

In the zapping period by the user, the DVB-H front end should not turn off the power supply, and a zapping burst to be subsequently transmitted is received, and a normal service relating to the zapping burst is selected.

### (Fourth Embodiment)

This embodiment relates a DVB-H receiving terminal.

In the embodiment, unlike in a third embodiment, a normal service stream and a zapping service stream are processed by a single system. Since the other parts are the same as those in the third embodiment, a description thereof will be omitted.

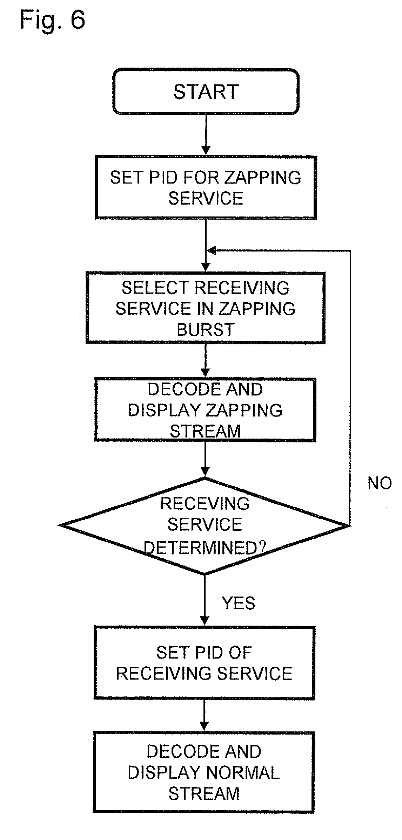

FIG. 6 shows a flow chart. In FIG. 6, control or the like of an underflow of a buffer will be omitted. The flow chart is started when a power supply is turned on or when a viewing service is switched. Immediately after the flow chart is started, a PID which transmits a zapping service is set. The zapping burst is subjected to a process of MPE-FEC or the like and converted into an IP stream. Thereafter, a desired service is selected. When the selection of the desired service is not ended, the same service in the next zapping burst is decoded. When another service is selected in zapping, another service stored in the current zapping burst is reflected, or a zapping stream of the selected service is decoded and displayed in the next zapping burst period.

When a normal service corresponding to the service is received in the zapping period, the zapping service should automatically shift to the normal service. However, when determination of service selection is not explicitly shown by a method such as a method of a determination key is depressed on the terminal, the zapping stream may be continuously reproduced.

In this manner, the normal service and the zapping service can be processed by a single system. More specifically, only a single system constituted by the PID filter unit 302, the section fitter/buffer unit 303, the CRC-32/checksum calculating unit 304, the MPE decapsulator unit 305, the MPE-FEC frame unit 306, the reliability frame unit 307, and the IP interface unit 308 may be arranged.

The embodiment is described as the receiving terminal. However, the processes of the embodiment are realized by a normal integrated circuit.

A zapping stream transmitting method according to the present invention concentrically arranges zapping streams and set the zapping stream in a specific PID to make it possible to rapidly access the zapping streams through a receiver. The present invention is useful as a DVB-H data transmitting method. The present invention can also be used to shorten zapping time in receiving in another transmitting scheme which burst-transmits data.

## Claims

1. A burst transmitting method in which burst transmission of compressing and transmitting contents of each of services in a short time period at a transmission rate sufficiently higher than a reproduction rate of the contents of each service is performed, the method comprising:
concentrating data relating to the each service as zapping data;
arranging the zapping data in a burst for zapping; and
transmitting the burst as zapping burst.

2. The burst transmitting method according to claim 1,
wherein a transmission frame of the zapping burst constitutes a zapping MPE-FEC frame, the zapping MPE-FEC frame is constituted by a zapping application data table and a zapping RS data table, and
wherein the zapping application data table is buried with a zapping IP datagram, and the zapping IP datagram carries a zapping stream.

3. The transmitting method according to claim 2, further comprising:
calculating redundant data for error correction for the normal stream from the table in which the normal stream is arranged;
arranging the calculated redundant data of the normal stream in a data table for error correction data;
calculating redundant data for error correction for the zapping stream from a table in which the zapping stream is arranged; and
arranging the calculated redundant data for zapping in a second data table for error correction data.

4. The transmitting method according to claim 1, further comprising:
arranging zapping streams corresponding to a plurality of normal services in one frame for zapping; and
setting the zapping stream in a unique PID different from that of a TS of the normal service to transmit.

5. The transmitting method according to claim 1, further comprising:
setting a value such as "no power off" or "10 ms" as small as possible in a Δt field representing a burst interval of the zapping service.

6. The transmitting method according to claim 4, further comprising:
designating a specific zapping stream extracted from all the zapping streams in the same frame for zapping by an IP source address, an IP destination address, or a port number.

7. The transmitting method according to claim 4, further comprising:
designating an association between the stream for zapping in the frame for zapping and a normal service related thereto by an IP source address, an IP destination address, or a port number.

8. A receiver which receives a signal transmitted by multiplexing and transmitting a plurality of normal streams and zapping streams relating to the plurality of normal stream that are compressed and burst-transmitted in a short time period at a transmission rate sufficiently higher than a reproduction rate of the contents of each service is performed, the receiver comprising:
a first set, which are used for processing the normal stream, comprising:
a first section filter/buffer unit;
a first CRC-32 or a checksum calculating unit;
a first MPE-decapsulator unit;
a first MPE-FEC frame unit; and
a first reliability frame unit; and
a second set, which are used for processing a stream for zapping operated in parallel to the normal stream, comprising:
a second section filter/buffer unit;
a second CRC-32 or checksum calculating unit;
a second MPE-decapsulator unit;
a second MPE-FEC frame unit; and
a second reliability frame unit.

9. A receiver which receives a signal transmitted by multiplexing and transmitting a plurality of normal streams and zapping streams relating to the plurality of normal stream that are compressed and burst-transmitted in a short time period at a transmission rate sufficiently higher than a reproduction rate of the contents of each service is performed, the receiver comprising:
a first set, which are used for processing the normal stream, comprising:
a first section filter/buffer unit;
a first CRC-32 or a checksum calculating unit;
a first MPE-decapsulator unit;
a first MPE-FEC frame unit; and
a first reliability frame unit,
a second set, which are used for processing a stream for zapping operated in parallel to the normal stream, comprising:
a second section filter/buffer unit;
a second CRC-32 or checksum calculating unit;
a second MPE-decapsulator unit;
a second MPE-FEC frame unit; and
a second reliability frame unit,
a firmware for executing the second set to process a stream for zapping.

10. The receiver according to claim 8 or 9, which receives a signal transmitted by multiplexing and transmitting a plurality of normal streams and zapping streams relating to the plurality of normal stream that are compressed and burst-transmitted in a short time period at a transmission rate sufficiently higher than a reproduction rate of the contents of each service is performed, further comprising:
a storing unit operable to store the normal streams in a buffer;
a detecting unit operable to detect that preparation for outputting from the buffer is completed; and
an interrupting unit operable to interrupt a process of zapping stream when it is detected that the preparation for outputting is completed.

11. The receiver according to claim 8 or 9, further comprising:
a storing unit operable to store the zapping streams; and
a showing unit operable to show all or some of the stored zapping streams depending on a request from a user.

12. A receiver which receives a signal transmitted by multiplexing and transmitting a plurality of normal streams and zapping streams relating to the plurality of normal stream that are compressed and burst-transmitted in a short time period at a transmission rate sufficiently higher than a reproduction rate of the contents of each service is performed, comprising:
a first section filter/buffer unit;
a first CRC-32 or a checksum calculating unit;
a first MPE-decapsulator unit;
a first MPE-FEC frame unit; and
a first reliability frame unit,
wherein each unit are commonly used in a process for the normal streams and a process for the zapping streams.
